# EUROPEAN PATENT SPECIFICATION

(11) **EP 3 633 835 B1**
(45) Date of publication and mention of the grant of the patent: **31.03.2021**
(21) Application number: 17911341.0
(22) Date of filing: 24.05.2017
(51) Int. Cl.: H02M 7/12, H02M 7/06, H02M 1/14, H02M 1/32

(54) **POWER CONVERSION DEVICE**
STROMWANDLUNGSVORRICHTUNG
DISPOSITIF DE CONVERSION DE COURANT

(43) Date of publication of application: 08.04.2020
(73) Proprietor: Mitsubishi Electric Corporation, Chiyoda-ku Tokyo 100-8310 (JP)
(72) Inventor: MOMOSE, Ryuji, Tokyo 100-8310 (JP)
(74) Representative: Pfenning, Meinig & Partner mbB
(86) International application number: PCT/JP2017/019386
(87) International publication number: WO 2018/216144

(56) References cited:
- JP-A- 2007 159 176
- JP-A- 2012 095 511
- JP-A- 2013 059 257
- JP-A- 2013 135 516
- JP-B2- 4 765 689
- US-A1- 2016 380 575
- US-A1- 2017 099 012
- SWAMY MAHESH M ET AL: "An optimal solution for operating a three-phase variable frequency drive from a single-phase AC source", 2014 IEEE ENERGY CONVERSION CONGRESS AND EXPOSITION (ECCE), IEEE, 14 September 2014 (2014-09-14), pages 1699-1706, XP032680624, DOI: 10.1109/ECCE.2014.6953623 [retrieved on 2014-11-11]

## Description

### Field

The present invention relates to a power conversion device that obtains a direct-current voltage by rectifying an alternating-current voltage and controls an operation of a load that operates on the basis of the direct-current voltage.

### Background

A power conversion device is conventionally used which obtains a direct-current voltage by rectifying an alternating-current voltage and controls an operation of a load that operates on the basis of the direct-current voltage. In the power conversion device, a smoothing capacitor is used which smooths a ripple voltage generated when obtaining the direct-current voltage by rectifying the alternating-current voltage. An example of the smoothing capacitor is an electrolytic capacitor. Because electrolytic capacitors change in characteristics due to ambient temperature or aging, techniques for coping with the change in characteristics have been proposed.

For example, a technique has been proposed with which, in order to cope with a decrease in a smoothing ability of an electrolytic capacitor due to a decrease in capacitance and an increase in equivalent series resistance when the electrolytic capacitor is used at a relatively low temperature, an operation of a load is limited for a certain period of time from when the load starts the operation up to when it is assumed that the electrolytic capacitor warms and the smoothing ability thereof recovers (see, for example, Patent Literature 1).

A method has also been proposed with which, in order to prevent a safety valve from operating due to a decrease in capacitance of an electrolytic capacitor depending on a period of use, power is supplied to a load depending on the magnitude of a ripple voltage included in a direct-current voltage obtained by performing rectification (see, for example, Patent Literature 2). US 2016/0380575 A1 discloses a motor drive control device including a three-phase rectifier; a boosting circuit including a reactor, a switching element, and a backflow preventing element and boosts a direct-current bus voltage supplied from the three-phase rectifier; a smoothing capacitor; an inverter circuit; a boosting control unit; an inverter control unit; and a circuit protecting unit suppresses a ripple current flowing through the smoothing capacitor. In the circuit protecting unit, a correlation of an on-duty ratio of the switching element included in the boosting circuit, the output power of the inverter circuit, and an estimated ripple current are set. On the basis of the on-duty ratio of the switching element, output power of the inverter circuit, and the correlation, the circuit protecting unit determines an estimated ripple current flowing through the smoothing capacitor. When the estimated ripple current exceeds a preset threshold, the circuit protecting unit suppresses the ripple current.

JP4765689B2 provides a deterioration detection circuit for a smoothing capacitor, used for various electronic devices, easy to control detection, and constituted inexpensively.

### Citation List

### Patent Literature

Patent Literature 1: Japanese Patent No. 5925425
Patent Literature 2: Japanese Patent Application Laid-open No. 2012-23891

### Summary

### Technical Problem

However, with regard to the technique described in Patent Literature 1, since the certain period of time up to when it is assumed that the electrolytic capacitor warms and the smoothing ability thereof recovers is decided by a plurality of factors, the certain period of time cannot be easily decided. The method with which power is supplied to the load depending on the magnitude of the ripple voltage described in Patent Literature 2 cannot be applied to a power conversion device in which the power supplied to the load cannot be easily changed. That is, in Patent Literature 1 and 2, the operation of the load operating on the basis of the direct-current voltage including the ripple voltage cannot be appropriately controlled depending on the magnitude of the ripple voltage.

The present invention has been made in view of the above, and it is an object of the present invention to obtain a power conversion device that controls an operation of a load that operates on the basis of a direct-current voltage including a ripple voltage depending on the magnitude of the ripple voltage, in a different way as in document US 2016/0380575 A1.

### Solution to Problem

To solve the problem and achieve the object described above, a power conversion device is provided according to claim 1. The power conversion device according to the present invention includes: a rectifier circuit that rectifies an alternating-current voltage supplied from an alternating-current power supply; a smoothing capacitor that smooths a direct-current voltage that has been rectified by the rectifier circuit, the direct-current voltage including a ripple voltage; a voltage detection unit that detects the direct-current voltage rectified by the rectifier circuit; an allowable voltage storage unit that stores an allowable voltage upper limit value and an allowable voltage lower limit value of a direct-current voltage used when controlling an operation of a load that operates on the basis of the direct-current voltage smoothed by the smoothing capacitor; a margin calculation unit that calculates an upper limit voltage difference that is a value obtained by subtracting a maximum value of the direct-current voltage detected by the voltage detection unit from the allowable voltage upper limit value stored in the allowable voltage storage unit, and a lower limit voltage difference that is a value obtained by subtracting the allowable voltage lower limit value stored in the allowable voltage storage unit from a minimum value of the direct-current voltage detected by the voltage detection unit, and that decides that one of the upper limit voltage difference and the lower limit voltage difference that has a smaller value is a direct-current voltage margin; a margin range storage unit that stores a plurality of margin ranges for stepwise limiting the operation of the load; a load limitation decision unit that decides a limitation on the operation of the load depending on a margin range including the direct-current voltage margin decided by the margin calculation unit among the plurality of margin ranges stored in the margin range storage unit; and a load control unit that controls the operation of the load depending on the limitation decided by the load limitation decision unit.

### Advantageous Effects of Invention

The power conversion device according to the present invention achieves an effect of controlling an operation of a load that operates on the basis of a direct-current voltage including a ripple voltage depending on the magnitude of the ripple voltage.

### Brief Description of Drawings

FIG. 1 is a diagram illustrating a configuration of a power conversion device according to a comparative example which is not covered by the claims.
FIG. 2 is a diagram for explaining an operation of a margin calculation unit included in the power conversion device according to the comparative example when the margin calculation unit decides a direct-current voltage margin.
FIG. 3 is a diagram illustrating an example of changes with time of power consumption of a load and the direct-current voltage margin when the power conversion device according to the comparative example controls an operation of the load, and a first margin range, a second margin range, and a third margin range stored in a margin range storage unit included in the power conversion device.
FIG. 4 is a diagram illustrating that a minimum value of a direct-current voltage detected by a voltage detection unit included in the power conversion device according to the comparative example decreases in proportion to the magnitude of a primary current.
FIG. 5 is a diagram illustrating a processing circuit when at least a part of components constituting the voltage detection unit, the margin calculation unit, a load limitation decision unit, and a load control unit included in the power conversion device according to the comparative example is realized by the processing circuit.
FIG. 6 is a diagram illustrating a processor when at least a part of functions of the voltage detection unit, the margin calculation unit, the load limitation decision unit, and the load control unit included in the power conversion device according to the comparative example is realized by the processor.
FIG. 7 is a diagram illustrating a configuration of a power conversion device according to a second embodiment, which is a claimed embodiment of the invention.
FIG. 8 is a diagram illustrating an example of an allowable voltage upper limit value and an allowable voltage lower limit value stored in an allowable voltage storage unit included in the power conversion device according to the second embodiment.
FIG. 9 is a diagram illustrating a configuration of a power conversion device according to a third embodiment, which is a claimed embodiment of the invention.
FIG. 10 is a diagram illustrating a relationship between a primary current and a direct-current voltage when an active converter included in the power conversion device according to the third embodiment performs a boosting operation.
FIG. 11 is a diagram illustrating a configuration of a power conversion device according to a fourth embodiment, which is a claimed embodiment of the invention.

### Description of Embodiments

Hereinafter, a power conversion device according to each embodiment of the present invention will be described in detail with reference to the drawings. The present invention is not limited to the embodiments.

### Comparative Example.

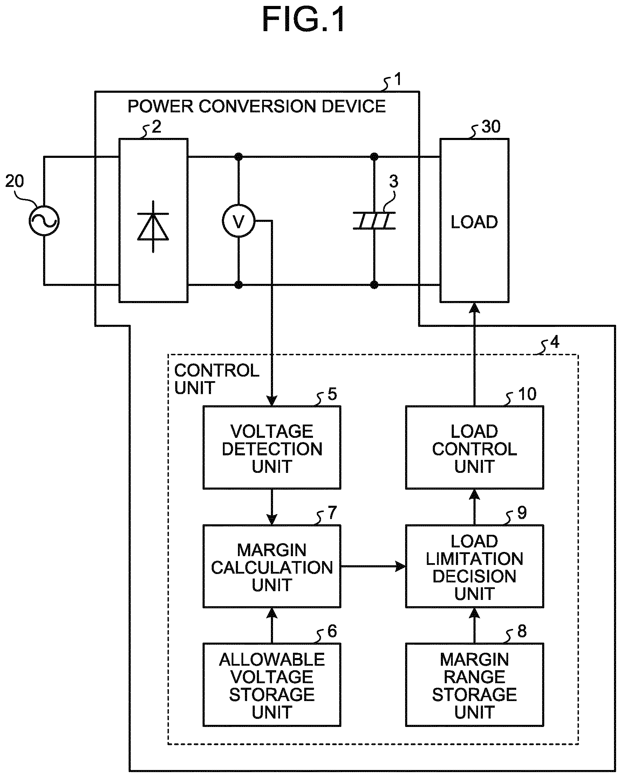

FIG. 1 is a diagram illustrating a configuration of a power conversion device 1 according to a comparative example. The power conversion device 1 includes a rectifier circuit 2 that rectifies an alternating-current voltage supplied from an alternating-current power supply 20. FIG. 1 also illustrates the alternating-current power supply 20. A terminal on an input side of the rectifier circuit 2 is connected to the alternating-current power supply 20, and the rectifier circuit 2 rectifies the alternating-current voltage supplied from the alternating-current power supply 20 into a direct-current voltage and outputs the direct-current voltage.

The power conversion device 1 further includes a smoothing capacitor 3 connected to a terminal on an output side of the rectifier circuit 2. An example of the smoothing capacitor 3 is an electrolytic capacitor. The smoothing capacitor 3 smooths a direct-current voltage which has been rectified by the rectifier circuit 2 and includes a ripple voltage. The direct-current voltage, in which the ripple voltage has been decreased by the smoothing capacitor 3 as compared to that when the direct-current voltage from the rectifier circuit 2 was supplied to the smoothing capacitor 3, is supplied from the smoothing capacitor 3 to a load 30 that operates on the basis of the direct-current voltage. FIG. 1 also illustrates the load 30.

The power conversion device 1 further includes a control unit 4 that controls an operation of the load 30. The control unit 4 includes a voltage detection unit 5 that detects the direct-current voltage rectified by the rectifier circuit 2, and an allowable voltage storage unit 6 that stores an allowable voltage upper limit value and an allowable voltage lower limit value of the direct-current voltage used when controlling the operation of the load 30. The allowable voltage upper limit value is an upper limit value in an allowable range of the direct-current voltage when the load 30 operates stably. The allowable voltage lower limit value is a lower limit value in the allowable range of the direct-current voltage. In the comparative example, the allowable voltage upper limit value and the allowable voltage lower limit value are both constant.

The control unit 4 further includes a margin calculation unit 7 that calculates an upper limit voltage difference which is a value obtained by subtracting a maximum value of the direct-current voltage detected by the voltage detection unit 5 from the allowable voltage upper limit value stored in the allowable voltage storage unit 6. The margin calculation unit 7 further calculates a lower limit voltage difference which is a value obtained by subtracting the allowable voltage lower limit value stored in the allowable voltage storage unit 6 from a minimum value of the direct-current voltage detected by the voltage detection unit 5. The margin calculation unit 7 decides that one of the calculated upper limit voltage difference and lower limit voltage difference which has a smaller value is a direct-current voltage margin.

The control unit 4 further includes a margin range storage unit 8 that stores a plurality of margin ranges for stepwise limiting the operation of the load 30 depending on the direct-current voltage margin. The control unit 4 further includes a load limitation decision unit 9 that decides a limitation on the operation of the load 30 depending on a margin range including the direct-current voltage margin decided by the margin calculation unit 7 among the plurality of margin ranges stored in the margin range storage unit 8. The control unit 4 further includes a load control unit 10 that controls the operation of the load 30 depending on the limitation decided by the load limitation decision unit 9.

The allowable voltage storage unit 6 and the margin range storage unit 8 are each, for example, a non-volatile or volatile semiconductor memory such as a random access memory (RAM), a read only memory (ROM), a flash memory, an erasable programmable read only memory (EPROM), or an electrically erasable programmable read only memory (EEPROM); a magnetic disk; a flexible disk; an optical disk; a compact disc; a mini disk; a digital versatile disk (DVD); or the like.

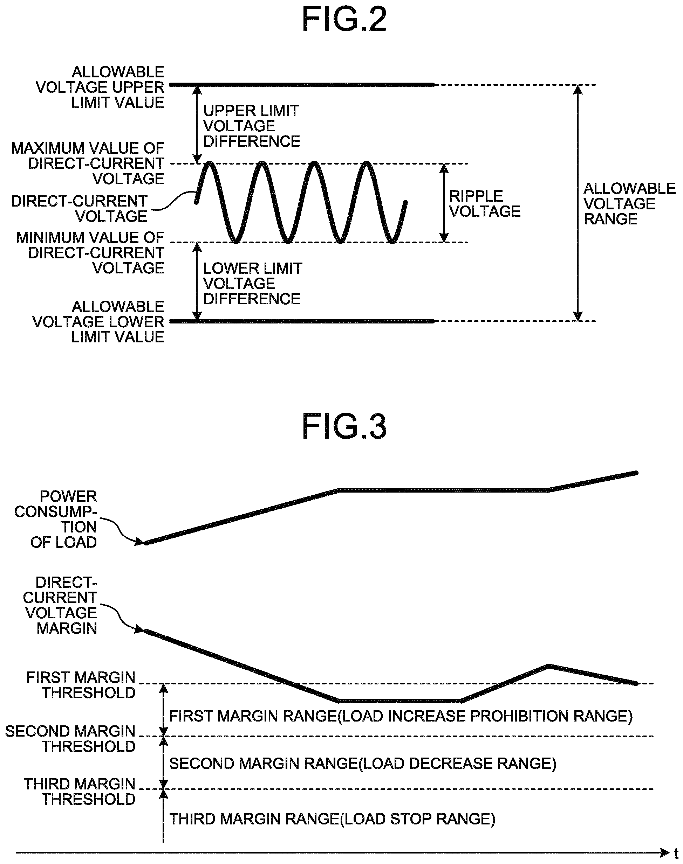

FIG. 2 is a diagram for explaining an operation of the margin calculation unit 7 when the margin calculation unit 7 included in the power conversion device 1 according to the comparative example decides the direct-current voltage margin. The margin calculation unit 7 detects a maximum value and a minimum value of the direct-current voltage detected by the voltage detection unit 5. Next, the margin calculation unit 7 reads the allowable voltage upper limit value and the allowable voltage lower limit value from the allowable voltage storage unit 6.

The margin calculation unit 7 calculates the upper limit voltage difference which is a value obtained by subtracting the maximum value of the direct-current voltage from the allowable voltage upper limit value, and calculates the lower limit voltage difference which is a value obtained by subtracting the allowable voltage lower limit value from the minimum value of the direct-current voltage. The margin calculation unit 7 decides that one of the calculated upper limit voltage difference and lower limit voltage difference which has a smaller value is the direct-current voltage margin. A range from the allowable voltage lower limit value to the allowable voltage upper limit value is an allowable voltage range for operating the load 30.

FIG. 3 is a diagram illustrating an example of changes with time of power consumption of the load 30 and the direct-current voltage margin when the power conversion device 1 according to the comparative example controls the operation of the load 30, and a first margin range, a second margin range, and a third margin range stored in the margin range storage unit 8 included in the power conversion device 1. In FIG. 3, reference character "t" indicates time.

The first margin range, the second margin range, and the third margin range illustrated in FIG. 3 are an example of the plurality of margin ranges. Each of the margin ranges is a range set to limit stepwise the operation of the load 30 depending on the direct-current voltage margin. The margin range storage unit 8 further stores a first margin threshold, a second margin threshold, and a third margin threshold for specifying the first margin range, the second margin range, and the third margin range. The first margin threshold is larger than the second margin threshold, and the second margin threshold is larger than the third margin threshold. For example, the first margin threshold is 20 V, the second margin threshold is 10 V, and the third margin threshold is 0 V.

In the example of FIG. 3, the first margin range is a range in which all values included in the first margin range are equal to or smaller than the first margin threshold and larger than the second margin threshold. The second margin range is a range in which all values included in the second margin range are equal to or smaller than the second margin threshold and larger than the third margin threshold. The third margin range is a range in which all values included in the third margin range are equal to or smaller than the third margin threshold.

For example, the load limitation decision unit 9 decides the limitation on the operation of the load 30 as follows. That is, when the direct-current voltage margin decided by the margin calculation unit 7 is included in the first margin range, the load limitation decision unit 9 decides a limitation for prohibiting an increase in the operation of the load 30. That is, the first margin range is a load increase prohibition range. The load limitation decision unit 9 decides a limitation for decreasing the operation of the load 30 when the direct-current voltage margin is included in the second margin range. That is, the second margin range is a load decrease range. Furthermore, when the direct-current voltage margin is included in the second margin range, the load limitation decision unit 9 decides a limitation for further suppressing the operation of the load 30 than in a case where the direct-current voltage margin is included in the first margin range.

The load limitation decision unit 9 decides a limitation for stopping the operation of the load 30 when the direct-current voltage margin is included in the third margin range. That is, the third margin range is a load stop range. Furthermore, when the direct-current voltage margin is included in the third margin range, the load limitation decision unit 9 decides a limitation for further suppressing the operation of the load 30 than in a case where the direct-current voltage margin is included in the second margin range. The load limitation decision unit 9 decides to operate the load 30 normally without limiting the operation thereof when the direct-current voltage margin is larger than the first margin threshold. A cycle of deciding the direct-current voltage margin is set by a user of the power conversion device 1 and the load 30. A cycle of deciding the limitation is also set by the user.

The load control unit 10 controls the operation of the load 30 depending on the limitation decided by the load limitation decision unit 9. For example, in a case where the load 30 is a motor, the load control unit 10 changes the number of revolutions per unit time of the motor depending on the limitation decided by the load limitation decision unit 9. For example, in a case where the load 30 is a variable resistor, the load control unit 10 changes a value of resistance depending on the limitation decided by the load limitation decision unit 9.

Specifically, in a case where the load 30 is a motor, the load control unit 10 performs control so as not to increase the number of revolutions per unit time of the motor when the direct-current voltage margin decided by the margin calculation unit 7 is included in the first margin range. The load control unit 10 reduces the number of revolutions per unit time of the motor when the direct-current voltage margin is included in the second margin range. The load control unit 10 stops the rotation of the motor when the direct-current voltage margin is included in the third margin range.

In a case where the load 30 is a compressor motor mounted on an outdoor unit of an air conditioner, an operation of the compressor motor may be affected by a configuration of a refrigerant circuit. In a case where the operation of the compressor motor is affected by the configuration of the refrigerant circuit, the power conversion device 1 reduces the number of revolutions per unit time of the compressor motor, to thereby suppress a burden on the compressor motor when the direct-current voltage margin is included in the second margin range.

In the case where the load 30 is the compressor motor mounted on the outdoor unit of the air conditioner, the power conversion device 1 reduces the number of revolutions per unit time of the compressor motor when the direct-current voltage margin is included in the second margin range. Even when the number of revolutions per unit time is reduced, a decrease in the burden on the compressor may be delayed. That is, there may be concern about an undershoot of the direct-current voltage margin. In response to such a case, it is preferable that one or both of an interval between the first margin threshold and the second margin threshold and an interval between the second margin threshold and the third margin threshold be set relatively large.

As described above, in the power conversion device 1 according to the comparative example, the margin calculation unit 7 calculates the upper limit voltage difference which is a value obtained by subtracting the maximum value of the direct-current voltage detected by the voltage detection unit 5 from the allowable voltage upper limit value stored in the allowable voltage storage unit 6, and calculates the lower limit voltage difference which is a value obtained by subtracting the allowable voltage lower limit value stored in the allowable voltage storage unit 6 from the minimum value of the direct-current voltage detected by the voltage detection unit 5. A difference between the maximum value and the minimum value of the direct-current voltage detected by the voltage detection unit 5 is the ripple voltage.

The margin calculation unit 7 decides that one of the calculated upper limit voltage difference and lower limit voltage difference which has a smaller value is the direct-current voltage margin. The load limitation decision unit 9 decides a limitation on the operation of the load 30 depending on a margin range including the direct-current voltage margin decided by the margin calculation unit 7 among the margin ranges stored in the margin range storage unit 8. The load control unit 10 controls the operation of the load 30 depending on the limitation decided by the load limitation decision unit 9.

That is, in the power conversion device 1, the operation of the load 30 operating on the basis of the direct-current voltage including the ripple voltage can be controlled depending on the magnitude of the ripple voltage. Furthermore, in the power conversion device 1, the operation of the load 30 can be controlled stepwise depending on the magnitude of the ripple voltage.

In addition, since the power conversion device 1 controls the operation of the load 30 depending on the magnitude of the ripple voltage, a ripple removal capability of the smoothing capacitor 3 can be maximized in real time, and the rectified direct-current voltage can be held in a voltage range for stable operation of the load 30. When the operation of the load 30 starts in a relatively low temperature environment, the operation of the load 30 may be limited in a state where the ripple removal capability of the smoothing capacitor 3 is low. However, when the smoothing capacitor 3 warms by lapse of time and the smoothing ability of the smoothing capacitor 3 recovers, the power conversion device 1 can release the limitation on the load 30. That is, the power conversion device 1 can operate the load 30 stably even when the load 30 starts operating in a relatively low temperature environment.

Furthermore, since the power conversion device 1 controls stepwise the operation of the load 30 depending on the magnitude of the ripple voltage, even when the ripple removal capability of the smoothing capacitor 3 falls below previously assumed capability, the power conversion device 1 can control the operation of the load 30 appropriately.

In the case where the load 30 is a compressor motor of an air conditioner, it takes a relatively long time for a temperature of air in a space where an indoor unit included in the air conditioner is provided to approach a set temperature when the operation of the compressor motor is limited. However, because the direct-current voltage is held within a range in which the compressor motor can operate stably, the power conversion device 1 can avoid a situation where the compressor motor does not operate completely.

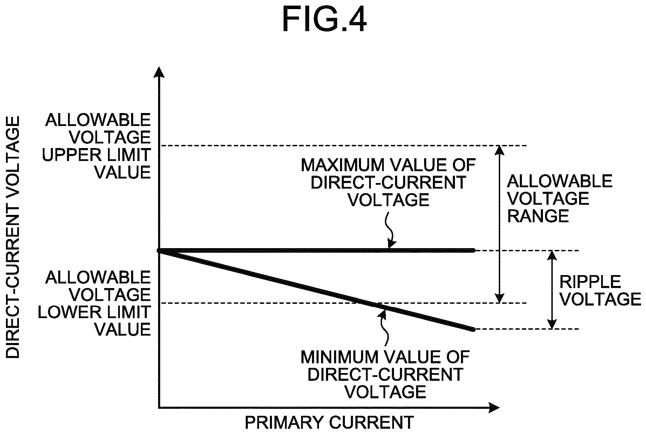

In FIG. 2, both the maximum value and the minimum value of the direct-current voltage detected by the voltage detection unit 5 are constant. However, the minimum value of the direct-current voltage changes depending on the magnitude of a primary current flowing from the alternating-current power supply 20 to the rectifier circuit 2. FIG. 4 is a diagram illustrating that the minimum value of the direct-current voltage detected by the voltage detection unit 5 included in the power conversion device 1 according to the comparative example decreases in proportion to the magnitude of the primary current. Even when the minimum value of the direct-current voltage decreases in proportion to the magnitude of the primary current, the margin calculation unit 7 calculates the lower limit voltage difference which is a value obtained by subtracting the allowable voltage lower limit value stored in the allowable voltage storage unit 6 from the minimum value of the direct-current voltage detected by the voltage detection unit 5.

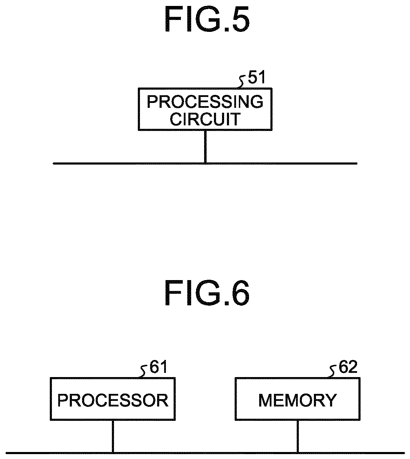

FIG. 5 is a diagram illustrating a processing circuit 51 when at least a part of components constituting the voltage detection unit 5, the margin calculation unit 7, the load limitation decision unit 9, and the load control unit 10 included in the power conversion device 1 according to the comparative example is realized by the processing circuit 51. That is, at least a part of functions of the voltage detection unit 5, the margin calculation unit 7, the load limitation decision unit 9, and the load control unit 10 may be realized by the processing circuit 51.

The processing circuit 51 is dedicated hardware. The processing circuit 51 is, for example, a single circuit, a composite circuit, a programmed processor, a parallel programmed processor, an application specific integrated circuit (ASIC), a field-programmable gate array (FPGA), or a combination thereof. A part of the voltage detection unit 5, the margin calculation unit 7, the load limitation decision unit 9, and the load control unit 10 may be dedicated hardware separate from the rest.

FIG. 6 is a diagram illustrating a processor 61 when at least a part of functions of the voltage detection unit 5, the margin calculation unit 7, the load limitation decision unit 9, and the load control unit 10 included in the power conversion device 1 according to the comparative example is realized by the processor 61. That is, at least a part of the functions of the voltage detection unit 5, the margin calculation unit 7, the load limitation decision unit 9, and the load control unit 10 may be realized by the processor 61 executing programs stored in a memory 62. The processor 61 is a central processing unit (CPU), a processing device, an arithmetic device, a microprocessor, a microcomputer, or a digital signal processor (DSP). FIG. 6 also illustrates the memory 62.

When at least a part of the functions of the voltage detection unit 5, the margin calculation unit 7, the load limitation decision unit 9, and the load control unit 10 is realized by the processor 61, the part of the functions is realized by a combination of the processor 61 with software, firmware, or software and firmware. The software or the firmware is described as a program and stored in the memory 62. By reading and executing the programs stored in the memory 62, the processor 61 realizes at least a part of the functions of the voltage detection unit 5, the margin calculation unit 7, the load limitation decision unit 9, and the load control unit 10.

That is, when at least a part of the functions of the voltage detection unit 5, the margin calculation unit 7, the load limitation decision unit 9, and the load control unit 10 is realized by the processor 61, the power conversion device 1 includes the memory 62 for storing programs with which steps executed by a part of the voltage detection unit 5, the margin calculation unit 7, the load limitation decision unit 9, and the load control unit 10 are executed as a result. It can also be said that the programs stored in the memory 62 cause a computer to execute a procedure or method executed by a part of the voltage detection unit 5, the margin calculation unit 7, the load limitation decision unit 9, and the load control unit 10. The memory 62 is, for example, a non-volatile or volatile semiconductor memory such as a RAM, a ROM, a flash memory, an EPROM, or an EEPROM; a magnetic disk; a flexible disk; an optical disk; a compact disc; a mini disk; a DVD; or the like.

Regarding a plurality of functions of the voltage detection unit 5, the margin calculation unit 7, the load limitation decision unit 9, and the load control unit 10, a part of the functions may be realized by dedicated hardware, and the rest of the functions may be realized by software or firmware. Thus, the functions of the voltage detection unit 5, the margin calculation unit 7, the load limitation decision unit 9, and the load control unit 10 can be realized by hardware, software, firmware, or a combination thereof.

### Second Embodiment.

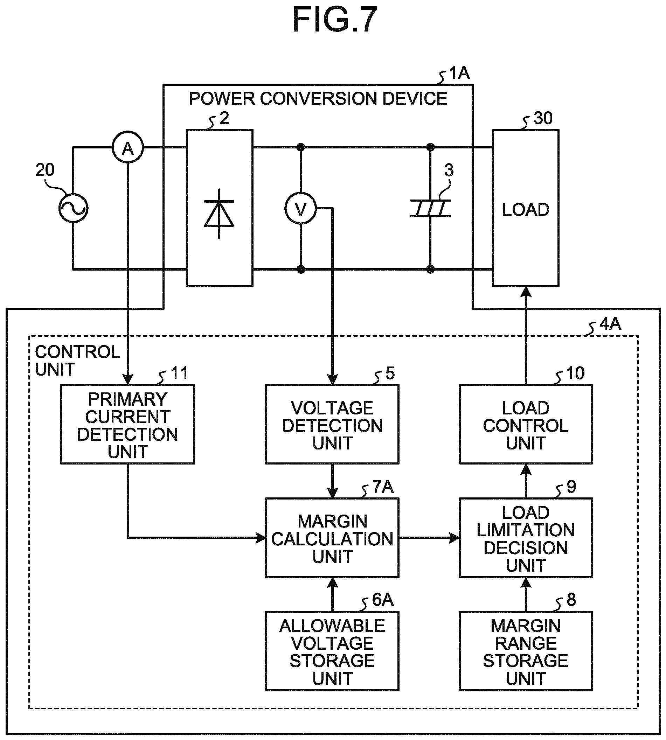

FIG. 7 is a diagram illustrating a configuration of a power conversion device 1A according to a second embodiment. The power conversion device 1A includes the rectifier circuit 2, the smoothing capacitor 3, the voltage detection unit 5, the margin range storage unit 8, the load limitation decision unit 9, and the load control unit 10 included in the power conversion device 1 according to the comparative example. In the second embodiment, the control unit 4 of the comparative example is replaced with a control unit 4A. In the second embodiment, differences from the comparative example will be mainly described.

The power conversion device 1A further includes a primary current detection unit 11 that detects a primary current flowing from the alternating-current power supply 20 to the rectifier circuit 2. The primary current detection unit 11 is connected to a terminal on an input side of the rectifier circuit 2. The primary current detection unit 11 is included in the control unit 4A that includes the voltage detection unit 5, the margin range storage unit 8, the load limitation decision unit 9, and the load control unit 10.

In the second embodiment, the allowable voltage storage unit 6 of the comparative example is replaced with an allowable voltage storage unit 6A. The allowable voltage storage unit 6A is included in the control unit 4A. The allowable voltage storage unit 6A stores an allowable voltage upper limit value and an allowable voltage lower limit value for each of a plurality of primary currents. That is, the allowable voltage storage unit 6A stores a plurality of sets of the allowable voltage upper limit value and the allowable voltage lower limit value, and the plurality of sets correspond to the plurality of primary currents. The allowable voltage storage unit 6A is, for example, a nonvolatile or volatile semiconductor memory such as a RAM, a ROM, a flash memory, an EPROM, or an EEPROM; a magnetic disk; a flexible disk; an optical disk; a compact disc; a mini disk; a DVD; or the like.

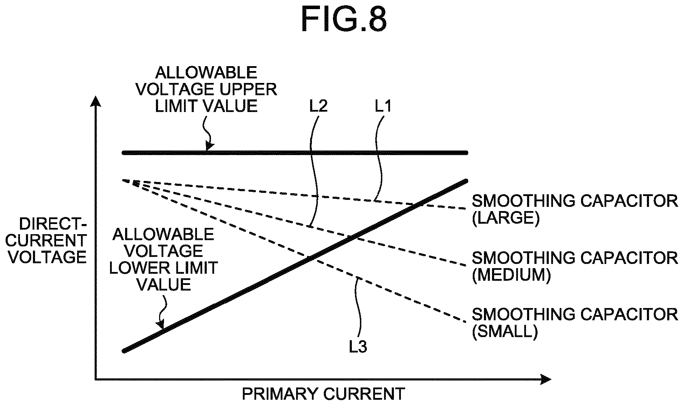

FIG. 8 is a diagram illustrating an example of the allowable voltage upper limit value and the allowable voltage lower limit value stored in the allowable voltage storage unit 6A included in the power conversion device 1A according to the second embodiment. In the comparative example, the allowable voltage upper limit value and the allowable voltage lower limit value are both constant. In the second embodiment, the allowable voltage upper limit value is constant regardless of the primary current, but the allowable voltage lower limit value increases as the primary current increases. Specifically, in the second embodiment, the allowable voltage lower limit value is directly proportional to the magnitude of the primary current.

In the second embodiment, the margin calculation unit 7 of the comparative example is replaced with a margin calculation unit 7A. The margin calculation unit 7A is included in the control unit 4A. Similarly to the margin calculation unit 7, the margin calculation unit 7A calculates the upper limit voltage difference and the lower limit voltage difference using an allowable voltage upper limit value and an allowable voltage lower limit value of a set corresponding to the primary current detected by the primary current detection unit 11 among the plurality of sets of the allowable voltage upper limit value and the allowable voltage lower limit value stored in the allowable voltage storage unit 6A. Similarly to the margin calculation unit 7, the margin calculation unit 7A decides that one of the calculated upper limit voltage difference and lower limit voltage difference which has a smaller value is the direct-current voltage margin.

As described above, the power conversion device 1A according to the second embodiment calculates the upper limit voltage difference and the lower limit voltage difference using the allowable voltage upper limit value and the allowable voltage lower limit value of the set corresponding to the primary current detected by the primary current detection unit 11. That is, the power conversion device 1A can control the operation of the load 30 depending on the magnitude of the ripple voltage in consideration of the primary current.

In FIG. 8, the minimum values of the direct-current voltage corresponding to the capacitance of the smoothing capacitor 3 are each indicated by a broken line. Specifically, in FIG. 8, an example of the minimum value of the direct-current voltage when the capacitance of the smoothing capacitor 3 is relatively large is indicated by a first broken line L1, an example of the minimum value of the direct-current voltage when the capacitance of the smoothing capacitor 3 is relatively medium is indicated by a second broken line L2, and an example of the minimum value of the direct-current voltage when the capacitance of the smoothing capacitor 3 is relatively small is indicated by a third broken line L3.

In FIG. 8, a character string "smoothing capacitor (large)" is added to the first broken line L1, a character string "smoothing capacitor (medium)" is added to the second broken line L2, and a character string "smoothing capacitor (small)" is added to the third broken line L3. Cross points between a solid line and the broken lines in FIG. 8 are each a point at which the direct-current voltage margin decided by the margin calculation unit 7A becomes 0 V. As indicated by the first broken line L1, the second broken line L2, and the third broken line L3, the direct-current voltage of the smoothing capacitor 3 decreases as the primary current increases regardless of the capacitance.

Although the allowable voltage upper limit value is constant in the second embodiment described above, the allowable voltage upper limit value may not be constant. In any case, the allowable voltage storage unit 6A stores the allowable voltage upper limit value and the allowable voltage lower limit value for each of the plurality of primary currents.

At least a part of functions of the voltage detection unit 5, the margin calculation unit 7A, the load limitation decision unit 9, the load control unit 10, and the primary current detection unit 11 included in the power conversion device 1A according to the second embodiment may be realized by a processing circuit having the same function as the processing circuit 51 described in the comparative example.

At least a part of the functions of the voltage detection unit 5, the margin calculation unit 7A, the load limitation decision unit 9, the load control unit 10, and the primary current detection unit 11 may be realized by a processor having the same function as the processor 61 described in the comparative example. When at least a part of the functions of the voltage detection unit 5, the margin calculation unit 7A, the load limitation decision unit 9, the load control unit 10, and the primary current detection unit 11 is realized by the processor, the power conversion device 1A includes a memory for storing programs with which steps executed by at least a part of the voltage detection unit 5, the margin calculation unit 7A, the load limitation decision unit 9, the load control unit 10, and the primary current detection unit 11 are executed as a result. The memory is a memory having the same function as the memory 62 described in the comparative example.

### Third Embodiment.

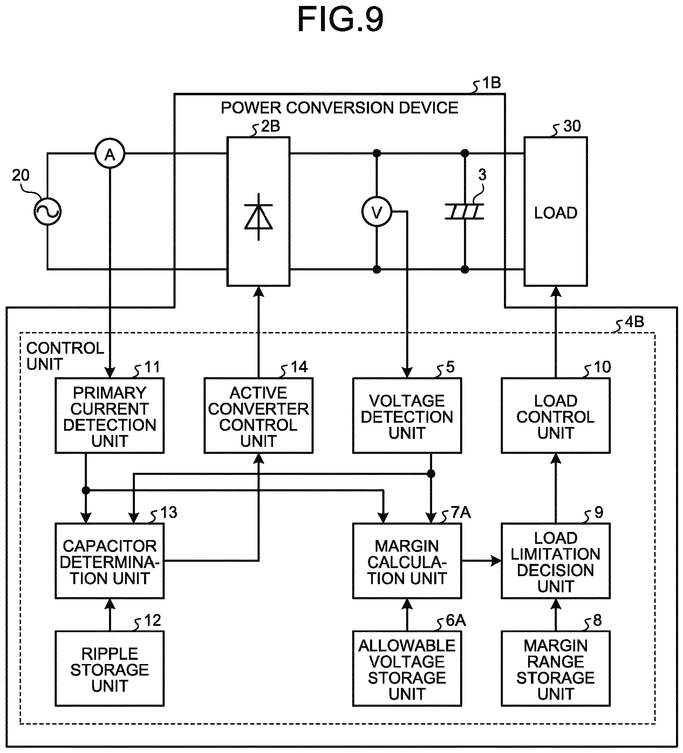

FIG. 9 is a diagram illustrating a configuration of a power conversion device 1B according to a third embodiment. The power conversion device 1B includes the smoothing capacitor 3, the voltage detection unit 5, the allowable voltage storage unit 6A, the margin calculation unit 7A, the margin range storage unit 8, the load limitation decision unit 9, the load control unit 10, and the primary current detection unit 11 included in the power conversion device 1A according to the second embodiment. The power conversion device 1B includes, instead of the rectifier circuit 2 of the second embodiment, an active converter 2B having a function of boosting an alternating-current voltage to an arbitrary direct-current voltage. In the third embodiment, the control unit 4A of the second embodiment is replaced with a control unit 4B. In the third embodiment, differences from the second embodiment will be mainly described.

The power conversion device 1B includes a ripple storage unit 12 that stores a ripple voltage range in a case where the smoothing capacitor 3 has been specified in advance to be normal for each of the plurality of primary currents. The ripple storage unit 12 is included in the control unit 4B that includes the voltage detection unit 5, the allowable voltage storage unit 6A, the margin calculation unit 7A, the margin range storage unit 8, the load limitation decision unit 9, the load control unit 10, and the primary current detection unit 11. The ripple storage unit 12 is, for example, a nonvolatile or volatile semiconductor memory such as a RAM, a ROM, a flash memory, an EPROM, or an EEPROM; a magnetic disk; a flexible disk; an optical disk; a compact disc; a mini disk; a DVD; or the like.

The power conversion device 1B further includes a capacitor determination unit 13 that determines whether the smoothing capacitor 3 is normal. The capacitor determination unit 13 is included in the control unit 4B. The capacitor determination unit 13 calculates a ripple voltage from the direct-current voltage detected by the voltage detection unit 5. Specifically, the capacitor determination unit 13 calculates the ripple voltage by subtracting, from a maximum value of the direct-current voltage detected by the voltage detection unit 5, a minimum value thereof.

The capacitor determination unit 13 determines whether the smoothing capacitor 3 is normal by comparing the ripple voltage range corresponding to the primary current detected by the primary current detection unit 11 among a plurality of ripple voltage ranges stored in the ripple storage unit 12 with the calculated ripple voltage. Specifically, the capacitor determination unit 13 determines whether the calculated ripple voltage is included in the ripple voltage range corresponding to the primary current detected by the primary current detection unit 11 among the plurality of ripple voltage ranges stored in the ripple storage unit 12, and when it is determined that the calculated ripple voltage is included in the ripple voltage range corresponding thereto, the capacitor determination unit 13 determines that the smoothing capacitor 3 is normal.

The power conversion device 1B further includes an active converter control unit 14 that controls the active converter 2B. The active converter control unit 14 is included in the control unit 4B. The active converter control unit 14 causes the active converter 2B to perform a boosting operation only when it is determined by the capacitor determination unit 13 that the smoothing capacitor 3 is normal.

That is, the active converter 2B performs the boosting operation only when it is determined that the smoothing capacitor 3 is normal. That is, the power conversion device 1B can increase the voltage supplied to the load 30 only when the smoothing capacitor 3 is normal.

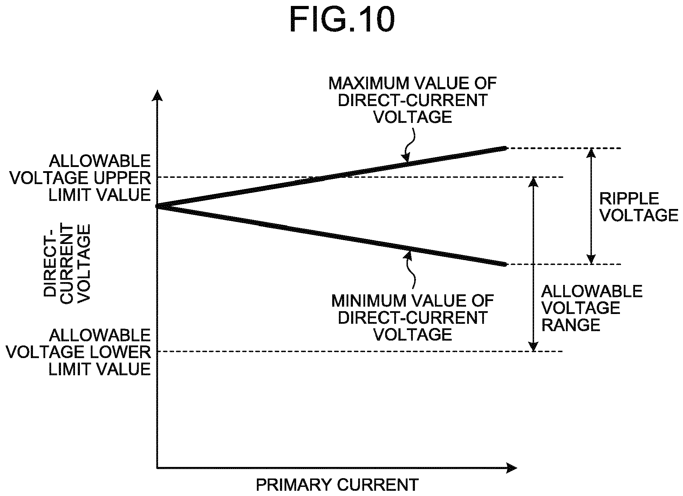

FIG. 10 is a diagram illustrating a relationship between the primary current and the direct-current voltage when the active converter 2B included in the power conversion device 1B according to the third embodiment performs a boosting operation. As illustrated in FIG. 10, when the active converter 2B performs the boosting operation, a difference between the maximum value and the minimum value of the direct-current voltage detected by the voltage detection unit 5 increases as a value of the primary current detected by the primary current detection unit 11 increases. That is, when the active converter 2B performs the boosting operation, the ripple voltage increases as the value of the primary current increases. For example, when the active converter 2B performs the boosting operation, the ripple voltage is directly proportional to the magnitude of the primary current.

As can be understood from the first broken line L1, the second broken line L2, and the third broken line L3 in FIG. 8, the larger the capacitance of the smoothing capacitor 3, the lower the ripple voltage included in the direct-current voltage rectified by the active converter 2B. In addition, as can be understood from FIG. 10, the larger the primary current, the higher the ripple voltage. When the plurality of ripple voltage ranges described above are stored in the ripple storage unit 12 in consideration of the capacitance of the smoothing capacitor 3 and a relationship between the primary current and the ripple voltage, the capacitor determination unit 13 can appropriately determine whether the smoothing capacitor 3 is normal.

The active converter control unit 14 further has a function of determining whether there is a possibility that, in a case where the active converter 2B has started the boosting operation, a maximum value of the direct-current voltage including the ripple voltage after the boosting exceeds an upper limit value of the direct-current voltage which the load 30 is allowed to have, on the basis of whether the smoothing capacitor 3 is normal. Therefore, by the active converter 2B having started the boosting operation in a state where the capacitance of the smoothing capacitor 3 is low, the active converter control unit 14 can avoid a situation in which the allowable voltage upper limit value exceeds the maximum value of the direct-current voltage including the ripple voltage.

The capacitor determination unit 13 has a function of determining whether the smoothing capacitor 3 has a capacitance characteristic capable of suppressing an overshoot of the direct-current voltage which is a concern immediately after the active converter 2B starts the boosting operation, on the basis of the ripple voltage and the primary current.

The active converter control unit 14 constantly determines whether there is a possibility that, in a case where the active converter 2B has started the boosting operation, the maximum value of the direct-current voltage including the ripple voltage after the boosting exceeds the upper limit value of the direct-current voltage which the load 30 is allowed to have. Consequently, in a case where the load 30 is actuated under a relatively low temperature environment and then the temperature around the smoothing capacitor 3 rises and the smoothing capacitor 3 recovers to a normal state, the active converter control unit 14 can cause the active converter 2B to perform the boosting operation at a point of time when the smoothing capacitor 3 recovers to the normal state. When the smoothing capacitor 3 recovers to the normal state is when the smoothing capacitor 3 recovers to a state where the smoothing capacitor 3 can suppress the overshoot of the direct-current voltage.

At least a part of functions of the voltage detection unit 5, the margin calculation unit 7A, the load limitation decision unit 9, the load control unit 10, the primary current detection unit 11, the capacitor determination unit 13, and the active converter control unit 14 included in the power conversion device 1B according to the third embodiment may be realized by a processing circuit having the same function as the processing circuit 51 described in the comparative example.

At least a part of the functions of the voltage detection unit 5, the margin calculation unit 7A, the load limitation decision unit 9, the load control unit 10, the primary current detection unit 11, the capacitor determination unit 13, and the active converter control unit 14 may be realized by a processor having the same function as the processor 61 described in the comparative example.

When at least a part of the functions of the voltage detection unit 5, the margin calculation unit 7A, the load limitation decision unit 9, the load control unit 10, the primary current detection unit 11, the capacitor determination unit 13, and the active converter control unit 14 is realized by the processor, the power conversion device 1B includes a memory for storing programs with which steps executed by at least a part of the voltage detection unit 5, the margin calculation unit 7A, the load limitation decision unit 9, the load control unit 10, the primary current detection unit 11, the capacitor determination unit 13, and the active converter control unit 14 are executed as a result. The memory is a memory having the same function as the memory 62 described in the comparative example.

### Fourth Embodiment.

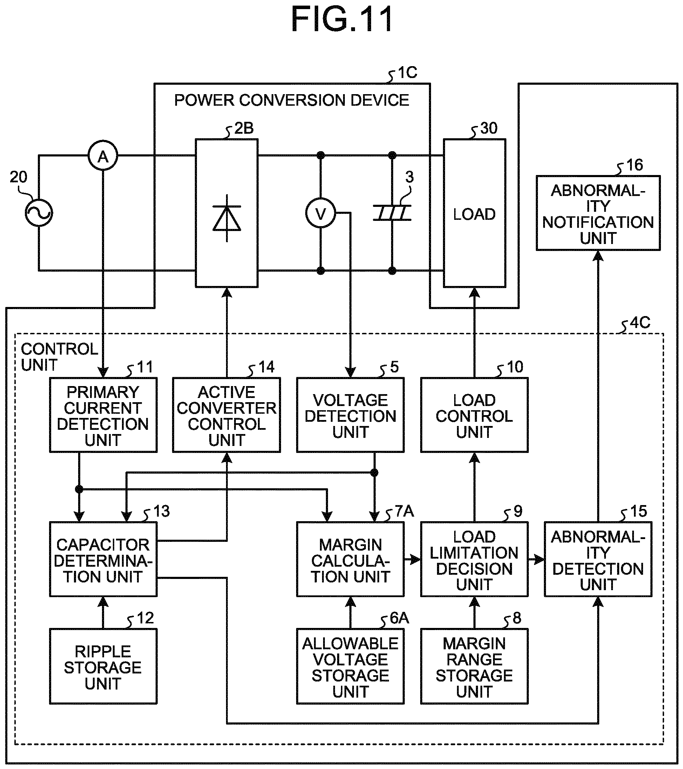

FIG. 11 is a diagram illustrating a configuration of a power conversion device 1C according to a fourth embodiment. The power conversion device 1C includes the active converter 2B, the smoothing capacitor 3, the voltage detection unit 5, the allowable voltage storage unit 6A, the margin calculation unit 7A, the margin range storage unit 8, the load limitation decision unit 9, the load control unit 10, the primary current detection unit 11, the ripple storage unit 12, the capacitor determination unit 13, and the active converter control unit 14 included in the power conversion device 1B according to the third embodiment. In the fourth embodiment, the control unit 4B of the third embodiment is replaced with a control unit 4C. In the fourth embodiment, differences from the third embodiment will be mainly described.

The power conversion device 1C further includes an abnormality detection unit 15 that determines that an abnormality has occurred when the capacitor determination unit 13 does not determine that the smoothing capacitor 3 is normal continuously in a predetermined period. The abnormality detection unit 15 determines that an abnormality has occurred also when the load limitation decision unit 9 decides to limit the operation of the load 30 continuously in a predetermined period. The abnormality detection unit 15 is included in the control unit 4C that includes the voltage detection unit 5, the allowable voltage storage unit 6A, the margin calculation unit 7A, the margin range storage unit 8, the load limitation decision unit 9, the load control unit 10, the primary current detection unit 11, the ripple storage unit 12, the capacitor determination unit 13, and the active converter control unit 14.

The power conversion device 1C further includes an abnormality notification unit 16 that, when the abnormality detection unit 15 determines that an abnormality has occurred, notifies the outside of the power conversion device 1C that the abnormality has occurred. An example of the abnormality notification unit 16 is a display device that displays that an abnormality has occurred. Another example of the abnormality notification unit 16 is a speaker that notifies by sound that an abnormality has occurred.

The power conversion device 1C determines that an abnormality has occurred when the smoothing capacitor 3 is not normal or the operation of the load 30 is limited continuously in a predetermined period, and notifies the outside of the power conversion device 1C that the abnormality has occurred. A user can cope with the abnormality by being notified that the abnormality has occurred. For example, the user can take measures to replace the active converter 2B or the smoothing capacitor 3 with a normal one. That is, when an abnormality occurs, the power conversion device 1C enables the user to take measures to the abnormality early. Furthermore, the power conversion device 1C can shorten a period during which the load 30 cannot operate.

As described above, the power conversion device 1C determines that an abnormality has occurred when the smoothing capacitor 3 is not normal or the operation of the load 30 is limited continuously in a predetermined period. Since the predetermined period is set, the power conversion device 1C can determine that, for example, an unstable state immediately after the load 30 starts the operation in a relatively low temperature environment is not abnormal.

In a case where the abnormality detection unit 15 determines that an abnormality has occurred, the abnormality detection unit 15 may decide the content of the abnormality depending on the degree of limitation or a period of limitation when the operation of the load 30 is limited. In that case, the abnormality notification unit 16 also notifies the outside of the power conversion device 1C of the content of the abnormality decided by the abnormality detection unit 15. The user can take more appropriate measures to the abnormality by being notified of the content of the abnormality.

The smoothing capacitor 3 may be a capacitor which is more excellent in a function of being less prone to deterioration with age than in a function of suppressing the ripple voltage.

At least a part of functions of the voltage detection unit 5, the margin calculation unit 7A, the load limitation decision unit 9, the load control unit 10, the primary current detection unit 11, the capacitor determination unit 13, the active converter control unit 14, the abnormality detection unit 15, and the abnormality notification unit 16 included in the power conversion device 1C according to the fourth embodiment may be realized by a processing circuit having the same function as the processing circuit 51 described in the comparative example.

At least a part of the functions of the voltage detection unit 5, the margin calculation unit 7A, the load limitation decision unit 9, the load control unit 10, the primary current detection unit 11, the capacitor determination unit 13, the active converter control unit 14, the abnormality detection unit 15, and the abnormality notification unit 16 may be realized by a processor having the same function as the processor 61 described in the comparative example.

When at least a part of the functions of the voltage detection unit 5, the margin calculation unit 7A, the load limitation decision unit 9, the load control unit 10, the primary current detection unit 11, the capacitor determination unit 13, the active converter control unit 14, the abnormality detection unit 15, and the abnormality notification unit 16 is realized by the processor, the power conversion device 1C includes a memory for storing programs with which steps executed by at least a part of the voltage detection unit 5, the margin calculation unit 7A, the load limitation decision unit 9, the load control unit 10, the primary current detection unit 11, the capacitor determination unit 13, the active converter control unit 14, the abnormality detection unit 15, and the abnormality notification unit 16 are executed as a result. The memory is a memory having the same function as the memory 62 described in the comparative example.

### Reference Signs List

1, 1A, 1B, 1C power conversion device; 2 rectifier circuit; 2B active converter; 3 smoothing capacitor; 4, 4A, 4B, 4C control unit; 5 voltage detection unit; 6, 6A allowable voltage storage unit; 7, 7A margin calculation unit; 8 margin range storage unit; 9 load limitation decision unit; 10 load control unit; 11 primary current detection unit; 12 ripple storage unit; 13 capacitor determination unit; 14 active converter control unit; 15 abnormality detection unit; 16 abnormality notification unit; 20 alternating-current power supply; 30 load; 51 processing circuit; 61 processor; 62 memory.

## Claims

1. A power conversion device (1A, 1B, 1C) comprising:
a rectifier circuit (2) arranged to rectify an alternating-current voltage supplied from an alternating-current power supply (20);
a smoothing capacitor (3) arranged to smooth a direct-current voltage that has been rectified by the rectifier circuit (2) and includes a ripple voltage;
a voltage detection unit (5) arranged to detect the direct-current voltage rectified by the rectifier circuit (2);
an allowable voltage storage unit (6A) arranged to store an allowable voltage upper limit value and an allowable voltage lower limit value of a direct-current voltage used when controlling an operation of a load (30) that operates on a basis of the direct-current voltage smoothed by the smoothing capacitor (3);
a margin calculation unit (7A) arranged to calculate an upper limit voltage difference that is a value obtained by subtracting a maximum value of the direct-current voltage detected by the voltage detection unit (5) from the allowable voltage upper limit value stored in the allowable voltage storage unit (6A), and a lower limit voltage difference that is a value obtained by subtracting the allowable voltage lower limit value stored in the allowable voltage storage unit (6A) from a minimum value of the direct-current voltage detected by the voltage detection unit (5), and to decide that one of the upper limit voltage difference and the lower limit voltage difference that has a smaller value is a direct-current voltage margin;
a margin range storage unit (8) arranged to store a plurality of margin ranges for stepwise limiting the operation of the load (30);
a load limitation decision unit (9) arranged to decide a limitation on the operation of the load (30) depending on a margin range including the direct-current voltage margin decided by the margin calculation unit (7A) among the plurality of margin ranges stored in the margin range storage unit (8);
a load control unit (10) arranged to control the operation of the load (30) depending on the limitation decided by the load limitation decision unit (9); and
a primary current detection unit (11) arranged to detect a primary current flowing from the alternating-current power supply (20) to the rectifier circuit (2), wherein
the allowable voltage storage unit (6A) is configured to store a set including the allowable voltage upper limit value and the allowable voltage lower limit value for each of a plurality of primary currents, and
the margin calculation unit (7A) is configured to calculate the upper limit voltage difference and the lower limit voltage difference using the allowable voltage upper limit value and the allowable voltage lower limit value of a set corresponding to the primary current detected by the primary current detection unit (11) among a plurality of sets of the allowable voltage upper limit value and the allowable voltage lower limit value stored in the allowable voltage storage unit (6A).

2. The power conversion device (1B) according to claim 1, further comprising:
a ripple storage unit (12) to store a ripple voltage range in a case where the smoothing capacitor (3) has been specified in advance to be normal for each of the plurality of primary currents;
a capacitor determination unit (13) to calculate a ripple voltage from the direct-current voltage detected by the voltage detection unit (5), and to determine whether the smoothing capacitor (3) is normal by comparing a ripple voltage range corresponding to the primary current detected by the primary current detection unit (11) among a plurality of ripple voltage ranges stored in the ripple storage unit (12) with the calculated ripple voltage; and
an active converter control unit (14) to control the rectifier circuit (2), wherein
the rectifier circuit (2) is an active converter (2B) having a function of boosting the alternating-current voltage to an arbitrary direct-current voltage, and
the active converter control unit (14) is configured to cause the active converter (2B) to perform a boosting operation only when it is determined by the capacitor determination unit (13) that the smoothing capacitor (3) is normal.

3. The power conversion device (1C) according to claim 2, further comprising:
an abnormality detection unit (15) to determine that an abnormality has occurred when the capacitor determination unit (13) does not determine that the smoothing capacitor (3) is normal continuously in a predetermined period; and
an abnormality notification unit (16) to, when the abnormality detection unit (15) determines that an abnormality has occurred, notify an outside of the power conversion device (1C) that the abnormality has occurred.

4. The power conversion device (1C) according to claim 3, wherein
the abnormality detection unit (15) is configured to determine that an abnormality has occurred also when the load limitation decision unit (9) decides to limit the operation of the load (30) continuously in a predetermined period.

## Patentansprüche

1. Energieumwandlungseinrichtung (1A, 1B, 1C), umfassend:
eine Gleichrichterschaltung (2), die angeordnet ist, um eine Wechselspannung, die von einer Wechselstromversorgung (20) bereitgestellt ist, gleichzurichten;
einen Glättungskondensator (3), der angeordnet ist, um eine Gleichspannung, die durch die Gleichrichterschaltung (2) gleichgerichtet wurde, und eine überlagerte Wechselspannung enthält, zu glätten;
eine Spannungserfassungseinheit (5), die angeordnet ist, um die durch die Gleichrichterschaltung (2) gleichgerichtete Gleichspannung zu erfassen;
eine Zulässige-Spannung-Speichereinheit (6A), die angeordnet ist, um einen oberen Grenzwert für die zulässige Spannung und einen unteren Grenzwert für die zulässige Spannung einer Gleichspannung, die genutzt wird, wenn ein Betrieb einer Last (30) gesteuert wird, die auf Grundlage der durch den Glättungskondensator (3) geglätteten Gleichspannung arbeitet, zu speichern;
eine Margenberechnungseinheit (7A), die angeordnet ist, um eine Obere-Grenzspannung-Differenz, die ein Wert ist, der erhalten ist durch Subtrahieren eines Maximalwerts der durch die Spannungserfassungseinheit (5) erfassten Gleichspannung von dem in der Zulässige-Spannung-Speichereinheit (6A) gespeicherten oberen Grenzwert für die zulässige Spannung, und eine Untere-Grenzspannung-Differenz, die ein Wert ist, der erhalten wird durch Subtrahieren des unteren Grenzwerts für die zulässige Spannung, der in der Zulässige-Spannung-Speichereinheit (6A) gespeichert ist, von einem Minimalwert der Gleichspannung, die durch die Spannungserfassungseinheit (5) erfasst wird, zu berechnen, und festzulegen, dass eine von der Obere-Grenzspannung-Differenz und der Untere-Grenzspannung-Differenz, die einen kleineren Wert hat, eine Gleichspannungsmarge ist;
eine Margenbereich-Speichereinheit (8), die angeordnet ist, um eine Vielzahl von Margenbereichen zum schrittweisen Begrenzen des Betriebs der Last (30) zu speichern;
eine Lastbegrenzung-Festlegungseinheit (9), die angeordnet ist, um eine Begrenzung des Betriebs der Last (30) festzulegen in Abhängigkeit von einem Margenbereich, umfassend die Gleichspannungsmarge, die durch die Margenberechnungseinheit (7A) aus der Vielzahl der in der Margenbereich-Speichereinheit (8) gespeicherten Margenbereiche bestimmt wird;
eine Laststeuereinheit (10), die angeordnet ist, um den Betrieb der Last (30) in Abhängigkeit von der durch die Lastbegrenzung-Festlegungseinheit (9) festgelegten Begrenzung zu steuern; und
eine Primärstromerfassungseinheit (11), die angeordnet ist, um einen von der Wechselstromversorgung (20) zu der Gleichrichterschaltung (2) fließenden Primärstrom zu erfassen, wobei
die Zulässige-Spannung-Speichereinheit (6A) eingerichtet ist, eine Menge, enthaltend den oberen Grenzwert für die zulässige Spannung und den unteren Grenzwert für die zulässige Spannung, zu speichern für jeden einer Vielzahl von Primärströmen, und
die Margenberechnungseinheit (7A) eingerichtet ist, die Obere-Grenzspannung-Differenz und die Untere-Grenzspannung-Differenz zu berechnen unter Verwendung des oberen Grenzwerts für die zulässige Spannung und des unteren Grenzwerts für die zulässige Spannung einer Menge, die dem durch die Primärstromerfassungseinheit (11) erfassten Primärstrom entspricht, aus einer Vielzahl von Mengen des oberen Grenzwerts für die zulässige Spannung und des unteren Grenzwerts für die zulässige Spannung, die in der Zulässige-Spannung-Speichereinheit (6A) gespeichert sind.

2. Energieumwandlungseinrichtung (1B) nach Anspruch 1, ferner umfassend:
eine Überlagerte-Wechselspannung-Speichereinheit (12), um einen überlagerten Wechselspannungsbereich zu speichern in einem Fall, in dem der Glättungskondensator (3) für jeden der Vielzahl von Primärströmen im Voraus spezifiziert wurde, normal zu sein;
eine Kondensator-Bestimmungseinheit (13), um eine überlagerte Wechselspannung zu berechnen aus der durch die Spannungserfassungseinheit (5) erfassten Gleichspannung, und zu bestimmen, ob der Glättungskondensator (3) normal ist, durch Vergleichen eines überlagerten Wechselspannungsbereichs, der dem durch die Primärstromerfassungseinheit (11) erfassten Primärstrom entspricht, aus einer Vielzahl von überlagerten Wechselspannungsbereichen, die in der Überlagerte-Wechselspannung-Speichereinheit (12) gespeichert sind, mit der berechneten überlagerten Wechselspannung; und
eine Aktivwandler-Steuereinheit (14), um die Gleichrichterschaltung (2) zu steuern, wobei
die Gleichrichterschaltung (2) ein Aktivwandler (2B) ist, der die Funktion hat, die Wechselspannung auf eine beliebige Gleichspannung anzuheben, und
die Aktivwandler-Steuereinheit (14) eingerichtet ist, den Aktivwandler (2B) zu veranlassen, einen Anhebungsbetrieb durchzuführen, nur dann, wenn durch die Kondensator-Bestimmungseinheit (13) bestimmt ist, dass der Glättungskondensator (3) normal ist.

3. Energieumwandlungseinrichtung (1C) nach Anspruch 2, ferner umfassend:
eine Anomalie-Erfassungseinheit (15), um zu bestimmen, dass eine Anomalie aufgetreten ist, wenn die Kondensator-Bestimmungseinheit (13) nicht bestimmt, dass der Glättungskondensator (3) in einem vorherbestimmten Zeitraum kontinuierlich normal ist; und
eine Anomalie-Benachrichtigungseinheit (16), um, wenn die Anomalie-Erfassungseinheit (15) bestimmt, dass eine Anomalie aufgetreten ist, eine Außenseite der Energieumwandlungseinrichtung (1C) zu benachrichtigen, dass die Anomalie aufgetreten ist.

4. Energieumwandlungseinrichtung (1C) nach Anspruch 3, wobei
die Anomalie-Erfassungseinheit (15) eingerichtet ist, zu bestimmen, dass eine Anomalie aufgetreten ist, auch dann, wenn die Lastbegrenzung-Festlegungseinheit (9) festlegt, den Betrieb der Last (30) kontinuierlich in einem vorherbestimmten Zeitraum zu begrenzen.

## Revendications

1. Dispositif de conversion de puissance (1A, 1B, 1C) comprenant :
un circuit redresseur (2) agencé pour redresser une tension alternative fournie par une alimentation alternative (20) ;
un condensateur de lissage (3) agencé pour lisser une tension continue qui a été redressée par le circuit redresseur (2), et qui comprend une tension d'ondulation ;
une unité de détection de tension (5) agencée pour détecter la tension continue redressée par le circuit redresseur (2) ;
une unité de stockage de tension admissible (6A) agencée pour stocker une valeur limite supérieure de tension admissible, et une valeur limite inférieure de tension admissible, d'une tension continue utilisée lors de la commande du fonctionnement d'une charge (30), qui fonctionne sur la base de la tension continue lissée par le condensateur de lissage (3) ;
une unité de calcul de marge (7A) agencée pour calculer une différence de tension limite supérieure, qui est une valeur obtenue en soustrayant une valeur maximum de la tension continue détectée par l'unité de détection de tension (5), de la valeur limite supérieure de tension admissible stockée dans l'unité de stockage de tension admissible (6A), et une différence de tension limite inférieure, qui est une valeur obtenue en soustrayant la valeur limite inférieure de tension admissible stockée dans l'unité de stockage de tension admissible (6A), d'une valeur minimum de la tension continue détectée par l'unité de détection de tension (5), et pour décider que l'une de la différence de tension limite supérieure et de la différence de tension limite inférieure, qui présente une valeur plus petite, est une marge de tension continue ;
une unité de stockage de plages de marges (8) agencée pour stocker une pluralité de plages de marges afin de limiter par paliers le fonctionnement de la charge (30) ;
une unité de décision de limitation de charge (9) agencée pour décider une limitation du fonctionnement de la charge (30) selon une plage de marges comprenant la marge de tension continue décidée par l'unité de calcul de marge (7A), parmi la pluralité de plages de marges stockées dans l'unité de stockage de plages de marges (8) ;
une unité de commande de charge (10) agencée pour commander le fonctionnement de la charge (30) selon la limitation décidée par l'unité de décision de limitation de charge (9) ; et
une unité de détection de courant primaire (11) agencée pour détecter un courant primaire qui circule à partir de l'alimentation alternative (20) vers le circuit redresseur (2), où
l'unité de stockage de tension admissible (6A) est configurée pour stocker un ensemble comprenant la valeur limite supérieure de tension admissible, et la valeur limite inférieure de tension admissible, pour chacun d'une pluralité de courants primaires, et
l'unité de calcul de marge (7A) est configurée pour calculer la différence de tension limite supérieure, et la différence de tension limite inférieure, en utilisant la valeur limite supérieure de tension admissible, et la valeur limite inférieure de tension admissible, d'un ensemble correspondant au courant primaire détecté par l'unité de détection de courant primaire (11) parmi une pluralité d'ensembles de valeurs limites supérieures de tensions admissibles et de valeurs limites supérieures de tensions admissibles stockées dans l'unité de stockage de tension admissible (6A).

2. Dispositif de conversion de puissance (1B) selon la revendication 1, comprenant en outre :
une unité de stockage d'ondulation (12) destinée à stocker une plage de tensions d'ondulation dans un cas où le condensateur de lissage (3) a été spécifié à l'avance comme étant normal pour chacun de la pluralité de courants primaires ;
une unité de détermination de condensateur (13) destinée à calculer une tension d'ondulation à partir de la tension continue détectée par l'unité de détection de tension (5), et à déterminer si le condensateur de lissage (3) est normal en comparant une plage de tensions d'ondulation correspondant au courant primaire détecté par l'unité de détection de courant primaire (11) parmi une pluralité de plages de tensions d'ondulation stockées dans l'unité de stockage d'ondulation (12), à la tension d'ondulation calculée ; et
une unité de commande de convertisseur actif (14) destinée à commander le circuit redresseur (2), où
le circuit redresseur (2) est un convertisseur actif (2B) qui présente une fonction consistant à amplifier la tension alternative vers une tension continue arbitraire, et
l'unité de commande de convertisseur actif (14) est configurée pour faire exécuter par le convertisseur actif (2B) une opération d'amplification seulement lorsque l'unité de détermination de condensateur (13) détermine que le condensateur de lissage (3) est normal.

3. Dispositif de conversion de puissance (1C) selon la revendication 2, comprenant en outre :
une unité de détection d'anomalie (15) destinée à déterminer qu'une anomalie s'est produite lorsque l'unité de détermination de condensateur (13) ne détermine pas que le condensateur de lissage (3) est normal en permanence cours d'une période prédéterminée ; et
une unité de notification d'anomalie (16) destinée, lorsque l'unité de détection d'anomalie (15) détermine qu'une anomalie s'est produite, à notifier à l'extérieur du dispositif de conversion de puissance (1C), qu'une anomalie s'est produite.

4. Dispositif de conversion de puissance (1C) selon la revendication 3, où
l'unité de détection d'anomalie (15) est configurée pour déterminer qu'une anomalie s'est également produite lorsque l'unité de décision de limitation de charge (9) décide de limiter le fonctionnement de la charge (30) en permanence au cours d'une période prédéterminée.
